# EUROPÄISCHE PATENTSCHRIFT

(11) **EP 3 138 443 B1**
(45) Veröffentlichungstag und Bekanntmachung des Hinweises auf die Patenterteilung: **10.03.2021**
(21) Anmeldenummer: 16185177.9
(22) Anmeldetag: 22.08.2016
(51) Int. Cl.: A47B 88/43, A47B 88/407

(54) **VORRICHTUNG ZUR BEFESTIGUNG VON ZUBEHÖRTEILEN AN EINER MÖBELKOMPONENTE EINES MÖBELS**
DEVICE FOR FIXING ACCESSORIES TO A FURNITURE COMPONENT OF A PIECE OF FURNITURE
DISPOSITIF DE FIXATION DE PIECES ACCESSOIRES SUR UN COMPOSANT D'UN MEUBLE

(30) Priorität: 04.09.2015 DE 202015006277 U
(43) Veröffentlichungstag der Anmeldung: 08.03.2017
(73) Patentinhaber: Grass GmbH, 6973 Höchst (AT)
(72) Erfinder: Janzen, Jörg, 6890 Lustenau (AT)
(74) Vertreter: Patentanwälte Magenbauer & Kollegen Partnerschaft mbB

(56) Entgegenhaltungen:
- WO-A1-2010/011822
- DE-A1-102010 000 279
- DE-U1-202005 020 458
- DE-U1-202009 003 045
- US-A1- 2007 046 159
- US-A1- 2012 145 845

## Beschreibung

Die Erfindung betrifft eine Vorrichtung zur Befestigung von Zubehörteilen an einer Möbelkomponente eines Möbels, mit einem Zubehörträger, der wenigstens eine Montageschnittstelle zur werkzeuglosen Befestigung an der Möbelkomponente und wenigstens eine Befestigungsschnittstelle zur Befestigung von Zubehörteilen am Zubehörträger aufweist, wobei der Zubehörträger eine quer zur Längserstreckung des Aufnahmeraums verlaufenden zu einer Randseite des Zubehörträgers offenen Schlitz aufweist, der den Zubehörträger in ein erstes und ein zweites Trägerteil trennt, wobei die Trägerteile derart relativ zueinander bewegbar sind, dass der Abstand zwischen den beiden Haltemitteln zur Montage des Zubehörträgers an dem zugeordneten Montageabschnitt unter Aufweitung des Schlitzes vergrößerbar ist.

Zubehörteile für Möbelkomponenten von Möbeln sind bereits seit langem bekannt. Beispielsweise ist es bekannt, Ausziehführungen für bewegbare Möbelteile, beispielsweise Schubladen mit einer sogenannten Einzugsautomatik auszustatten, die ab einem bestimmten Schließweg des bewegbaren Möbelteils ein selbstständiges Einziehen des bewegbaren Möbelteils in die Schließstellung bewirkt. Ferner sind Dämpfungsvorrichtungen bekannt, die zur Dämpfung der Öffnungs- und/oder Schließstellung des bewegbaren Möbelteils dienen. Auch Ausstoßvorrichtungen für bewegbare Möbelteile sind bekannt, beispielsweise in Form sogenannter Touch-Latch-Einheiten, wodurch beim Überdrücken des bewegbaren Möbelteils in der Schließstellung nach innen ein selbstständiger Auswurf über eine bestimmte Auswurfstrecke erfolgt. Derartige Zubehörteile, insbesondere die Vorgenannten, sind in der Regel an den Führungen bzw. an Montagewinkeln befestigt, insbesondere werden sie dort angeschraubt oder angeschweißt. Dies ist jedoch in der Regel aufwendig.

Die US 2007/0046159 A1 offenbart eine Bewegungssteuerungshalterung zur Verwendung mit einer Schubladenführung, wobei eine Montageplatte vorgesehen ist, die an der Schubladenführung über eine Montageschnittstelle befestigbar ist und eine Befestigungsschnittstelle zur Befestigung eines Dämpfers aufweist.

Aufgabe der Erfindung ist es daher, eine Vorrichtung zur Befestigung von Zubehörteilen an eine Möbelkomponente eines Möbels zu schaffen, mit der sich Zubehörteile in einfacher und kostengünstiger Weise an der zugeordneten Möbelkomponente des Möbels befestigen lassen.

Die erfindungsgemäße Vorrichtung zur Befestigung von Zubehörteilen an eine Möbelkomponente eines Möbels umfasst einen Zubehörträger, der wenigstens eine Montageschnittstelle zur werkzeuglosen Befestigung an der Möbelkomponente und wenigstens eine Befestigungsschnittstelle zur Befestigung von Zubehörteilen am Zubehörträger aufweist.

Es entfällt der Aufwand, jedes Zubehörteil individuell an der zugeordneten Möbelkomponente befestigen zu müssen. Es ist lediglich notwendig, den Zubehörträger an der zugeordneten Möbelkomponente zu befestigen, was sich werkzeuglos und daher einfach und schnell durchführen lässt. Am Zubehörträger lässt sich dann über die wenigstens eine Befestigungsschnittstelle wenigstens ein Zubehörteil schnell und einfach befestigen. Zweckmäßigerweise weist der Zubehörträger mehrere Befestigungsschnittstellen auf, sodass an ihm mehrere Zubehörteile befestigt werden können. Es ist möglich, bei mehreren Befestigungsschnittstellen, alle Befestigungsschnittstellen mit Zubehörteilen zu bestücken oder je nach Bedarf nur die jeweils für das zugeordnete Zubehörteil benötigten Befestigungsschnittstellen.

Es ist beispielsweise möglich, an ein und derselben Befestigungsschnittstelle unterschiedliche Arten von Zubehörteilen zu befestigen. Es ist beispielsweise möglich, dass sämtliche Zubehörteile identische Anschlussstellen aufweisen, die auf die Anschlussstelle an dem Zubehörträger passen. Alternativ ist es jedoch auch möglich, mehrere individuelle Befestigungsschnittstellen vorzusehen, an der dann jeweils ein ganz bestimmtes Zubehörteil zu montieren ist.

Bei einer Weiterbildung der Erfindung ist der Zubehörträger als Flachkörper ausgebildet. Der Zubehörträger kann beispielsweise plattenartig ausgestaltet sein. Die Ausgestaltung des Zubehörträgers als Flachkörper bietet dem Vorteil, dass dieser eine relativ geringe Bauhöhe besitzt und daher platzsparend an der Möbelkomponente befestigt werden kann.

In besonders bevorzugter Weise sind Montageschnittstelle und Befestigungsschnittstelle an derselben Seite des Zubehörträgers angeordnet. Zweckmäßigerweise befinden sich Befestigungsschnittstelle und Montageschnittstelle an einer Oberseite des Zubehörträgers. Insbesondere die Befestigungsschnittstellen sind dann dort leicht zugänglich zur Bestückung mit den zugeordneten Zubehörteilen. Es ist jedoch alternativ denkbar, dass Montageschnittstelle und Befestigungsschnittstelle an verschiedenen Seiten des Zubehörträgers angeordnet sind

Erfindungsgemäß weist die Montageschnittstelle erste und zweite Haltemittel auf, über die der Zubehörträger lösbar am zugeordneten Montageabschnitt der Möbelkomponente gehalten ist. Vorzugsweise bilden die ersten und zweiten Haltemittel mit dem zugeordneten Montageabschnitt einen Formschluss. Insbesondere ist der Zubehörträger also formschlüssig am Montageabschnitt gehalten.

Erfindungsgemäß übergreifen die ersten und zweiten Haltemittel den zugeordneten Montageabschnitt an der Möbelkomponente.

Erfindungsgemäß Liegen die ersten und zweiten Haltemittel einander gegenüber und begrenzen zwischen sich einen sich in einer Längsrichtung des Zubehörträgers erstreckenden Aufnahmeraum für den zugeordneten Montageabschnitt an der Möbelkomponente.

Die ersten Haltemittel können eine sich in Längsrichtung des Zubehörträgers erstreckende Halteausnehmung zur Aufnahme eines freien Endes des Montageabschnitts aufweisen. Die Halteausnehmung kann bei der Herstellung des Zubehörträgers gleich mit ausgebildet werden.

Die zweiten Haltemittel können einen in Richtung der ersten Haltemittel weisenden Haltevorsprung aufweisen, der ein freies Ende des Montageabschnitts übergreift.

Dadurch ist ein einfaches und schnell durchzuführendes Lösen des Zubehörträgers vom Montageabschnitt möglich. Nach dem Lösen des Zubehörträgers schnappt das Federelement in seine Ausgangsstellung zurück, was insbesondere bei der Befestigung des Zubehörträgers am Montageelement von Vorteil ist, da nach vorherigem Aufweiten des Aufnahmeraums und Einführen des Montageabschnitts ein selbstständiger Halt des Zubehörträgers am zugeordneten Montageabschnitt erfolgt. Bei dem Federelement kann es sich beispielsweise um ein Zugfeder-Element handeln, das beim Aufweiten des Aufnahmeraums gespannt wird.

Der Zubehörträger weist einen quer zur Längserstreckung des Aufnahmeraums verlaufenden zu einer Randseite des Zubehörträgers hin offenen Schlitz auf, der den Zubehörträger in ein erstes und ein zweites Trägerteil trennt, wobei die Trägerteile derart relativ zueinander bewegbar sind, dass der Abstand zwischen den beiden Haltemitteln zur Montage des Zubehörträgers an dem zugeordneten Montageabschnitt unter Aufweitung des Schlitzes vergrößerbar ist.

Im Schlitz sind Federmittel angeordnet, deren Federkraft gegen die Aufweitung des Schlitzes wirkt. Dadurch ist eine schnelle und einfach Montage bzw. Demontage des Zubehörträgers am zugeordneten Montageabschnitt möglich, da die Federmittel nach Wegnahme der Aufspreizkraft selbsttätig wieder in ihre Ausgangsstellung zurückschnappen, wodurch die ersten und zweiten Haltemittel in Funktion treten und für den Halt des Zubehörträgers am Montageabschnitt sorgen.

Besonders bevorzugt sind die Federmittel einstückig mit den Trägerteilen verbunden. Die Federmittel können wenigstens eine insbesondere schlaufenförmig gestaltete Blattfeder aufweisen.

Bei einer Weiterbildung der Erfindung weist die Befestigungsschnittstelle wenigstens eine insbesondere als Durchbrechung ausgebildete Befestigungsöffnung für ein zugeordnetes Zubehörteil auf. Hier lässt sich beispielsweise als Gegenstück ein mit einem in die Befestigungsöffnung hineinragenden Anschlussstelle versehenden Zubehörteil befestigen.

Bei einer Weiterbildung der Erfindung weist der Zubehörträger ein insbesondere stegartig ausgebildetes Leitelement auf, an dessen Unterseite eine schrägverlaufende Leitfläche ausgebildet ist, an dem ein mit dem Zubehörträger zusammenwirkendes, einer bewegbaren Möbelkomponente zugeordnetes Funktionselement führbar ist.

Es ist möglich, dass an der Befestigungsschnittstelle eine Dämpfeinheit insbesondere zur Dämpfung der Öffnungs- und / oder Schließbewegung einer bewegbaren Möbelkomponente befestigt ist.

Bei einer Weiterbildung der Erfindung weist die Befestigungsschnittstelle eine Führungsleiste auf, an der die Dämpfeinheit beweglich geführt ist.

In besonders bevorzugter Weise besteht der Zubehörträger aus Kunststoff, insbesondere ist er als Kunststoffspritzgießteil ausgebildet.

Die Erfindung umfasst ferner ein Möbelteil, gekennzeichnet durch eine Vorrichtung nach einem der Ansprüche 1 bis 14. Ferner betrifft die Erfindung ein Möbel, mit einem Möbelkorpus und einem über eine Führungseinrichtung beweglich geführten bewegbaren Möbelteil, insbesondere Schublade, Tür oder Klappe, gekennzeichnet durch eine Vorrichtung nach einem der Ansprüche 1 bis 9.

Die Führungseinrichtung kann wenigstens eine Führungseinheit aufweisen, die eine am Möbelkorpus über wenigstens einen Montagewinkel befestigbare Korpusschiene und wenigstens eine mit dem bewegbaren Möbelteil verbundene, relativ beweglich zur Korpusschiene gelagerte Scheine aufweist, wobei der Montagewinkel einen Montageabschnitt aufweist, an dem der Zubehörträger montiert ist.

Bevorzugte Ausführungsbeispiele der Erfindung sind in der Zeichnung dargestellt und werden im Folgenden näher erläutert. In der Zeichnung zeigen:
- Figur 1:: Eine perspektivische Darstellung eines ersten Ausführungsbeispiels der erfindungsgemäßen Vorrichtung,
- Figur 2:: eine Draufsicht auf die Vorrichtung von Figur 1,
- Figur 3:: eine perspektivische Darstellung der Vorrichtung aus Figur 1 montiert an einer zugeordneten Möbelkomponente eines Möbels,
- Figur 4:: eine perspektivische Ansicht auf die Vorrichtung von Figur 3, wobei als Möbelkomponente eines Möbels eine Führungseinrichtung gezeigt ist und
- Figur 5:: ein zweites Ausführungsbeispiel der erfindungsgemäßen Vorrichtung montiert an einer als Führungseinrichtung ausgebildeten Möbelkomponente eines Möbels.

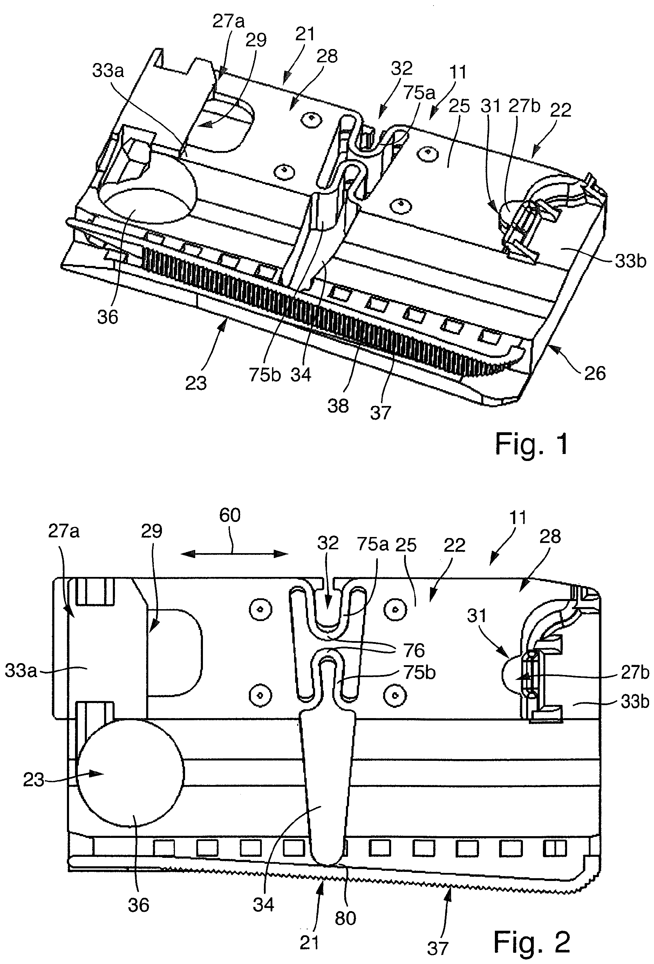

Die Figuren 1 bis 4 zeigen ein erstes Ausführungsbeispiel der erfindungsgemäßen Vorrichtung zur Befestigung von Zubehörteilen an einer Möbelkomponente 12 eines Möbels (nicht dargestellt). Die Vorrichtung 11 ist hier beispielhaft bei einer Befestigung an einer Komponente einer Führungseinrichtung 13 zur Führung eines bewegbaren Möbelteils in Form einer Schublade gezeigt. Es ist selbstverständlich möglich, die Vorrichtung 11 auch an anderen Möbelkomponenten von Möbeln, beispielsweise nicht beweglichen Möbelteilen zu befestigen.

Im Folgenden wird die erfindungsgemäße Vorrichtung 11 jedoch am Beispielsfall bei der Befestigung an einer Führungseinrichtung 13 einer Schublade erläutert. Die Schublade ist mittels der Führungseinrichtung 13 relativ zu einem Möbelkorpus (nicht dargestellt) verschieblich gelagert. Die Führungseinrichtung 13 umfasst mehrere Führungseinheiten 14, von denen zwei Führungseinheiten einander entgegengesetzt liegenden Seitenrändern der Schublade zugeordnet sind. In der Zeichnung ist lediglich eine einzelne Führungseinheit 14 gezeigt, jedoch ist die dem entgegengesetzten Seitenrand der Schublade zugeordnete andere Führungseinheit 14 in identischer Weise aufgebaut.

Die Führungseinheiten 14 besitzen jeweils eine Korpusschiene 15, die beispielsweise als umgebogenes Blechbauteil ausgestaltet sein können.

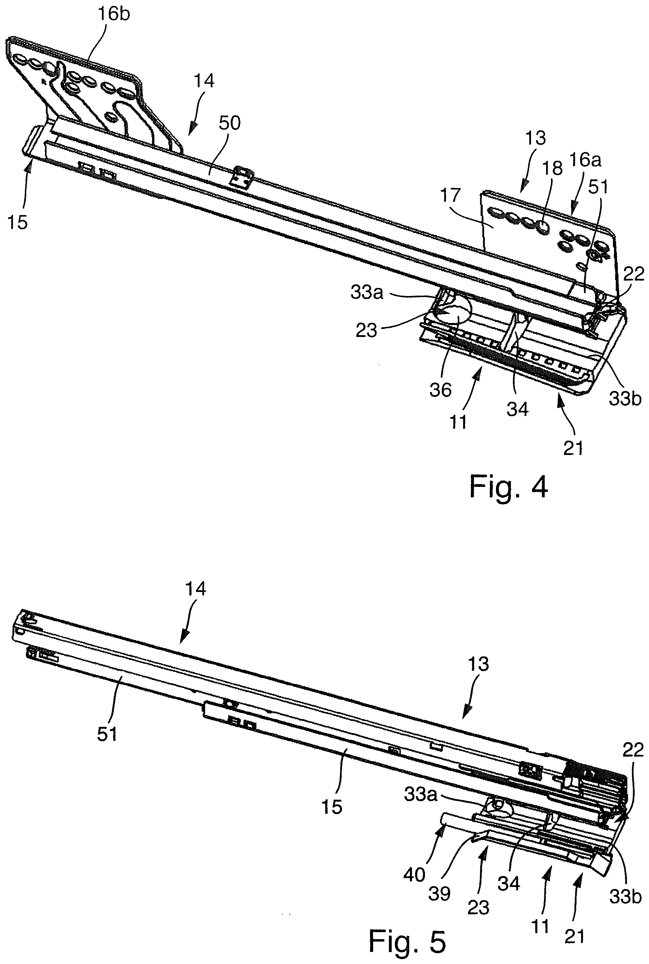

Wie insbesondere in Figur 4 dargestellt, besitzt die Korpusschiene 15 mehrere Montagewinkel 16a, 16b, die in Längsrichtung der Korpusschiene 15 hintereinander angeordnet sind.

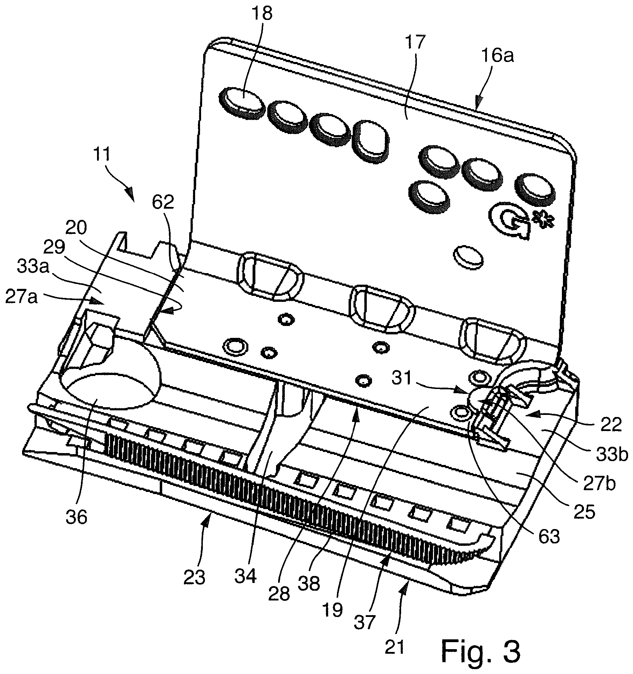

Wie insbesondere in Figur 3 dargestellt, besitzen die Montagewinkel 16a, 16b jeweils einen Montageschenkel 17, der mehrere, beispielsweise in Reihen hintereinander angeordnete Befestigungslöcher 18 aufweist, über die der Montagewinkel 16a, 16b mit Hilfe geeigneter Befestigungsmittel, beispielsweise Schrauben, an einer zugeordneten Seitenwand einer im Möbelkorpus ausgebildeten Schubladenaufnahme (nicht dargestellt) positionsfest befestigt werden kann.

Die Montagewinkel 16a, 16b besitzen jeweils einen winkelig, insbesondere rechtswinklig vom Montageschenkel 17 abstehenden Funktionsschenkel 19, an dem sich ein Montageabschnitt 20 befindet, an dem die Vorrichtung 11 befestigt werden kann.

An dem Funktionsschenkel 19 der Korpusschiene ist eine ebenfalls zur Führungseinheit 14 gehörende Laufschiene in Form einer Möbelteilschiene 15, die nachfolgend als Schubladenschiene bezeichnet wird, mittels Lagermitteln (nicht dargestellt) verschieblich geführt. Als Lagermittel dienen in Laufwägen angeordnete Wälzkörper, insbesondere Rollen, die auf einer an der Korpusschiene 13 ausgebildeten Führungsbahn entlangläuft. Die Schubladenschiene ist der Schublade zugeordnet und verläuft unterhalb des Schubladen-Bodens in Tiefenrichtung.

Neben der Möbelteilschiene 50 und der Korpusschiene 15 kann noch eine Mittelschiene 51 vorgesehen sein, die zum einen beweglich an der Korpusschiene 15 geführt ist und zum an der die Schubladenschiene beweglich gelagert ist. Die Mittelschiene 51 wirkt also zwischen der Schubladenschiene und der Korpusschiene 13.

Wie insbesondere in den Figuren 1 und 2 gezeigt, besitzt die Vorrichtung 11 einen Zubehörträger 21, der wenigstens eine Montageschnittstelle 22 zur werkzeuglosen Befestigung an der Möbelkomponente und wenigstens eine Befestigungsschnittstelle 23 zur Befestigung von Zubehörteilen am Zubehörträger 21 aufweist.

Wie insbesondere in Figur 1 gezeigt, ist der Zubehörträger 21 als Flachkörper ausgebildet, beispielsweise in Form einer Trägerplatte. Der Zubehörträger 21 besteht zweckmäßigerweise aus Kunststoff. Mit Vorteil ist der Zubehörträger 21 ein Kunststoffspritzgießteil, womit er vielfach reproduzierbar und in einfacher und kostengünstiger Weise herstellbar ist.

Der Zubehörträger 21 besitzt eine Oberseite 25 und eine dieser entgegengesetzte Unterseite 26. Im gezeigten Beispielsfall befinden sich Montageschnittstelle 22 und Befestigungsschnittstelle 23 an der Oberseite 25 des Zubehörträgers 21. Selbstverständlich ist es möglich, dass Montageschnittstelle 22 und Befestigungsschnittstelle 23 an verschiedenen Seiten des Zubehörträgers 21 ausgebildet sind.

Im Beispielsfall jedoch befindet sich die Montageschnittstelle 22 an der Oberseite 25 des Zubehörträgers 21. Die Montageschnittstelle 22 besitzt erste und zweite Haltemittel 27a, 27b, über die der Zubehörträger 21 lösbar am Montageabschnitt 20 des Funktionsschenkels 19 des zugeordneten Montagewinkels 16a befestigt werden kann.

Die ersten und zweiten Haltemittel 27a, 27b übergreifen im Montagezustand des Zubehörträgers 21 den Montageabschnitt 20 am Funktionsschenkel 19 des Montagewinkels 16a. Die ersten und zweiten Haltemittel 27a, 27b liegen einander gegenüber und begrenzen einen sich in Längsrichtung 60 des Zubehörträgers 21 erstreckenden Aufnahmeraum 28 für den Funktionsschenkel 19.

Die ersten Haltemittel 27a weisen eine sich in Längsrichtung 60 des Zubehörträgers 21 erstreckende Halteausnehmung 61 auf. Der freie Querschnitt der Halteausnehmung 61 ist größer als der Querschnitt des Funktionsschenkels 19, so dass sich ein erstes freies Ende 62 des Funktionsschenkels 19 in die Halteausnehmung 61 einführen lässt. Wie insbesondere in Figur 1 gezeigt, ist die Halteausnehmung 61 in Querrichtung des Zubehörträgers von Wandabschnitten begrenzt, so dass der Zubehörträger in Querrichtung gesichert ist, womit verhindert ist, dass sich der Zubehörträger 21 durch eine reine Querbewegung vom Funktionsschenkel 19 weg entfernen lässt.

Die zweiten Haltemittel 27b weisen einen in Richtung der ersten Haltemittel 27a weisenden Haltevorsprung auf, der beispielsweise halbkreisförmig gekrümmt ausgebildet ist (Fig. 1 und 2). Das Gegenstück zu der Halteausnehmung 61 der ersten Haltemittel 27a ist hier ein zwischen der Unterseite des Haltevorsprungs und der Oberseite 25 des Zubehörträgers 21 ausgebildeter halbkreisförmig verlaufender Aufnahmeschlitz 31 zur Aufnahme eines zweiten freien Endes 63 des Funktionsschenkels 19. Im Gegensatz zur Halteausnehmung 61 an den ersten Haltemitteln 27a ist hier keine seitliche Führung des Funktionsschenkels 19 vorgesehen.

Wie insbesondere in Fig. 2 dargestellt, weist der Zubehörträger 21 einen quer zur Längserstreckung des Aufnahmeraums 28 verlaufenden Schlitz 34 auf, der zu einer Längsseite des Zubehörträgers hin offen ist. Der Schlitz 34 wird durch geeignete Entformung bei der Herstellung des aus Kunststoffmaterial bestehenden Zubehörträgers gleich mit angeformt. Der Schlitz 34 divergiert zur Längsseite des Zubehörträgers 21. Mit anderen Worten, die Schlitzbreite des Schlitzes 34 vergrößert sich zur Längsseite des Zubehörträgers 21 hin.

Der Schlitz 34 trennt den Zubehörträger in ein erstes und zweites Trägerteil 33a, 33b. Die beiden Trägerteile sind derart relativ zueinander bewegbar, dass der Abstand zwischen den beiden Haltemitteln 27a, 27b zur Montage des Zubehörträgers an dem zugeordneten Montageabschnitt 20 unter Aufweitung des Schlitzes 34 vergrößerbar ist. Die beiden Trägerteile 33a, 33b sind am Grund des Schlitzes 34 über ein Festkörpergelenk 80 beweglich miteinander verbunden.

Im Schlitz 34 sind Federmittel 32 angeordnet, deren Federkraft gegen die Aufweitung des Schlitzes 34 wirkt. Wie insbesondere in Figur 2 dargestellt, sind die Federmittel 32 einstückig mit den beiden Trägerteilen 33a, 33b verbunden. Die Federmittel 32 umfassen im Beispielsfall zwei schlaufenförmig gestaltete Blattfedern 75a, 75b, die jeweils einenends am einen und andernends am anderen Trägerteil 33a, 33b angeformt sind. Die Blattfedern 75a, 75b besitzen jeweils einen Schlaufenabschnitt 76, der sich in Schlitz-Breitenrichtung etwa in der Mitte des Schlitzes 34 befindet. Die Schlaufenabschnitte 76 der Blattfedern 75a, 75b sind einander zugewandt.

Im beschriebenen Beispielsfall befindet sich die Befestigungsschnittstelle 23 ebenfalls an der Oberseite 25 des Zubehörträgers 21. Die Befestigungsschnittstelle 23 umfasst im Beispielsfall eine insbesondere kreisrunde Befestigungsöffnung in Form einer Durchbrechung 36, die sich also von der Oberseite 25 ausgehend durch den Zubehörträger 21 hindurch erstreckt und an der Unterseite 26 ausmündet. In diese Durchbrechung 36 lässt sich ein Zubehörteil (nicht dargestellt) befestigen, das beispielsweise eine zapfenartig ausgebildete an die Form der Durchbrechung 36 angepasste Anschlussstelle besitzt.

Die Befestigungsschnittstelle 23 umfasst ferner ein stegartig ausgebildetes Leitelement 37, an dessen Unterseite eine schräg verlaufende Leitfläche 38 ausgebildet ist, an dem ein mit dem Zubehörträger 21 zusammenwirkendes, der Schublade zugeordnetes Funktionselement führbar ist. Als Funktionselement kann beispielsweise eine Fangvorrichtung eingesetzt werden, die an der Schublade befestigt ist und die über die am Leitelement 37 ausgebildete Leitfläche 38 derart geführt ist, dass die Schublade trotzt unterschiedlichen Neigungen bezüglich der zugeordneten Führungseinheit eingefangen und anschließend geführt wird.

Zur Befestigung des Zubehörträgers 21 am zugeordneten Montageabschnitt 20 am Funktionsschenkel 19 des zugeordneten Montagewinkel 16a wird der Zubehörträger 21 zunächst auseinandergespreizt, indem die beiden Trägerteile 33a, 33b gegen die Federkraft der Blattfedern 75a, 75b voneinander weg gedrückt werden, wobei die Schlaufenabschnitte 76 aufgebogen werden. Als nächstes werden die ersten Haltemittel 27a mit der Halteausnehmung 29 auf das freie Ende des Funktionsschenkels 19 aufgesteckt, wobei dieses in die Halteausnehmung 29 eintaucht. Als nächstes kann dann der Zubehörträger 21 eingeschwenkt werden, sodass das entgegengesetzte andere freie Ende 63 des Funktionsschenkels 19 unter den Haltevorsprung einfährt. Anschließend wird die Aufspreizung der beiden Trägerteile 33a, 33b durch Loslassen aufgehoben, sodass die beiden Trägerteile 33a, 33b infolge der Federkraft der Blattfedern 75a, 75b wieder in ihre ursprüngliche Stellung zurückschnappen und dabei gleichzeitig an den beiden einander gegenüberliegenden Haltemitteln 27a, 27b den eingeführten Funktionsschenkel 19 umfassen. Der Zubehörträger 21 ist nun am zugeordneten Funktionsschenkel 19 gesichert, und zwar in allen drei Raumrichtungen.

Zweckmäßigerweise sind die Zubehörteile, bei denen es sich beispielsweise um eine Einzugsautomatik oder einen Dämpfer handeln kann, bereits zuvor an der zugeordneten Befestigungsschnittstelle 23 am Zubehörträger 21 montiert. Selbstverständlich ist es auch möglich, die Zubehörteile nach der Montage des Zubehörträgers 21 an den Funktionsschenkel 19 nachträglich zu befestigen.

Die Figur 5 zeigt ein zweites Ausführungsbeispiel der erfindungsgemäßen Vorrichtung 11. Das zweite Ausführungsbeispiel unterscheidet sich von dem zuvor beschriebenen ersten Ausführungsbeispiel durch die andersartige Ausgestaltung des Zubehörträgers 21. Im Gegensatz zu dem Leitelement 37 mit Leitfläche 38 des ersten Ausführungsbeispiels ist nun eine Führungsleiste 39, an der der Montage-Längsseite des Zubehörträgers 21 entgegengesetzten Längsseite ausgebildet. Wie insbesondere in Figur 5 dargestellt, ist an der Führungsleiste 39 eine Dämpfereinheit 40 beweglich geführt.

Die Montage des zweiten Ausführungsbeispiels des Zubehörträgers 21 erfolgt in derselben Weise wie der Zubehörträger 21 des ersten Ausführungsbeispiels.

## Patentansprüche

1. Vorrichtung zur Befestigung von Zubehörteilen an einer Möbelkomponente eines Möbels, mit einem Zubehörträger (21), der wenigstens eine Montageschnittstelle (22) zur werkzeuglosen Befestigung an der Möbelkomponente und wenigstens eine Befestigungsschnittstelle (23) zur Befestigung von Zubehörteilen am Zubehörträger (21) aufweist, wobei die Montageschnittstelle (22) am Zubehörträger (21) erste und zweite Haltemittel (27a, 27b) aufweist, über die der Zubehörträger (21) lösbar am zugeordneten Montageabschnitt (20) der Möbelkomponente gehalten werden kann wobei die ersten und zweiten Haltemittel (27a, 27b) den zugeordneten Montageabschnitt (20) an der Möbelkomponente übergreifen können, und wobei die ersten und zweiten Haltemittel (27a, 27b) einander gegenüberliegen und zwischen sich einen sich in einer Längsrichtung des Zubehörträgers (21) erstreckenden Aufnahmeraum (28) für den zugeordneten Montageabschnitt (20) an der Möbelkomponente begrenzen, wobei der Zubehörträger (21) eine quer zur Längserstreckung des Aufnahmeraums (28) verlaufenden zu einer Randseite des Zubehörträgers (21) offenen Schlitz (34) aufweist, der den Zubehörträger (21) in ein erstes und ein zweites Trägerteil (33a, 33b) trennt, wobei die Trägerteile (33a, 33b) derart relativ zueinander bewegbar sind, dass der Abstand zwischen den beiden Haltemitteln zur Montage des Zubehörträgers an dem zugeordneten Montageabschnitt (20) unter Aufweitung des Schlitzes (34) vergrößerbar ist, **dadurch gekennzeichnet, dass** im Schlitz Federmittel (32) angeordnet sind, deren Federkraft gegen die Aufweitung des Schlitzes (34) wirkt.

2. Vorrichtung nach Anspruch 1, **dadurch gekennzeichnet, dass** der Zubehörträger (21) als Flachkörper, insbesondere plattenartig ausgebildet ist.

3. Vorrichtung nach Anspruch 1 oder 2, **dadurch gekennzeichnet, dass** die ersten Haltemittel (27a) eine sich in Längsrichtung des Zubehörträgers (21) erstreckende Halteausnehmung (29) zur Aufnahme eines freien Endes des Montageabschnitts (20) aufweisen.

4. Vorrichtung nach einem der vorhergehenden Ansprüche, **dadurch gekennzeichnet, dass** die zweiten Haltemittel (27b) eine in Richtung der ersten Haltemittel (27a) weisenden Haltevorsprung aufweisen der ein freies Ende des Montageabschnitts übergreift.

5. Vorrichtung nach einem der vorhergehenden Ansprüche **dadurch gekennzeichnet, dass** die Federmittel einstückig mit den Trägerteilen (33a, 33b) verbunden sind, insbesondere wenigstens eine insbesondere schlaufenförmig gestaltete Blattfeder aufweisen.

6. Vorrichtung nach einem der vorhergehenden Ansprüche, **dadurch gekennzeichnet, dass** die Befestigungsschnittstelle (23) wenigstens eine insbesondere als Durchbrechung (36) ausgebildete Befestigungsöffnung für ein zugeordnetes Zubehörteil aufweist.

7. Vorrichtung nach einem der vorhergehenden Ansprüche, **dadurch gekennzeichnet, dass** der Zubehörträger (21) ein insbesondere stegartig ausgebildetes Leitelement (37) aufweist, an dessen Unterseite eine schräg verlaufende Leitfläche (38) ausgebildet ist, an dem ein mit dem Zubehörträger (21) zusammenwirkendes, einer bewegbaren Möbelkomponente zugeordnetes Funktionselement führbar ist.

8. Vorrichtung nach einem der vorhergehenden Ansprüche, **dadurch gekennzeichnet, dass** an der Befestigungsschnittstelle (23) eine Dämpfereinheit (40) insbesondere zur Dämpfung der Öffnungs- und / oder Schließbewegung einer bewegbaren Möbelkomponente befestigt ist, wobei vorzugsweise die Befestigungsschnittstelle (23) eine Führungsleiste (39) aufweist, an der die Dämpfereinheit (40) beweglich geführt ist.

9. Vorrichtung nach einem der vorhergehenden Ansprüche, **dadurch gekennzeichnet, dass** der Zubehörträger (21) aus Kunststoff besteht, insbesondere als Kunststoffspritzgießteil ausgebildet ist.

10. Möbelteil, **gekennzeichnet durch** eine Vorrichtung (11) nach einem der Ansprüche 1 bis 9.

11. Möbel, mit einem Möbelkorpus und einem über eine Führungseinrichtung (13) beweglich geführtes bewegbares Möbelteil, insbesondere Schublade, Tür oder Klappe, **gekennzeichnet durch** eine Vorrichtung (11) nach einem der Ansprüche 1 bis 12, wobei vorzugsweise die Führungseinrichtung (13) wenigstens eine Führungseinheit aufweist, die eine am Möbelkorpus über wenigstens einen Montagewinkel (16a, 16b) befestigbare Korpusschiene (15) und wenigstens eine mit dem bewegbaren Möbelteil verbundene, relativ beweglich zur Korpusschiene (15) gelagerte Laufschiene aufweist, wobei der Montagewinkel (16a, 16b) einen Montageabschnitt (20) aufweist, an dem der Zubehörträger (21) montiert ist.

## Claims

1. Device for fastening accessory parts to a furniture component of a piece of furniture, comprising an accessory carrier (21) having at least one mounting interface (22) for fastening without a tool to the furniture component and at least one fastening interface (23) for fastening accessory parts to the accessory carrier (21), wherein the mounting interface (22) on the accessory carrier (21) has first and second holding means (27a, 27b) by which the accessory carrier (21) can be detachably held on an associated mounting section (20) of the furniture component, wherein the first and second holding means (27a, 27b) can overlap the associated mounting section (20) on the furniture component and wherein the first and second holding means (27a, 27b) are opposite each other and define between them a receiving space (28) for the associated mounting section (20) on the furniture component, the receiving space extending in a longitudinal direction of the accessory carrier (21), wherein the accessory carrier (21) has a slot (34) that runs transversely to the longitudinal extension of the receiving space (28) and is open towards an edge side of the accessory carrier (21) and that divides the accessory carrier (21) into a first and a second carrier part (33a, 33b), wherein the carrier parts (33a, 33b) are moveable relative to each other such that the distance between the two holding means from the mounting of the accessory carrier on the associated mounting section (20) is enlargeable with simultaneous widening of the slot (34), **characterised in that** spring means (32) are arranged in the slot, whose spring force acts counter to the widening of the slot (34).

2. Device according to claim 1, **characterised in that** the accessory carrier (21) is formed as a flat body, in particular in a plate shape.

3. Device according to claim 1 or 2, **characterised in that** the first holding means (27a) have a holding recess (29) that extends in the longitudinal direction of the accessory carrier (21) for receiving a free end of the mounting section (20).

4. Device according to any one of the preceding claims, **characterised in that** the second holding means (27b) have a holding projection that points in a direction of the first holding means (27a) which overlaps a free end of the mounting section.

5. Device according to any one of the preceding claims, **characterised in that** the spring means are connected integrally to the carrier parts (33a, 33b), in particular they have at least one leaf spring designed in particular in a loop shape.

6. Device according to any one of the preceding claims, **characterised in that** the fastening interface (23) has at least one fastening opening formed in particular as a break-through (36) for an associated accessory part.

7. Device according to any one of the preceding claims, **characterised in that** the accessory carrier (21) has a control element (37) formed in particular in a web shape, on whose underside a transversely running control surface (38) is formed, on which a functional element interacting with the accessory carrier (21) and assigned to a movable furniture component can be guided.

8. Device according to any one of the preceding claims, **characterised in that** a damping unit (40) is fastened on the fastening interface (23) in particular for damping the opening and/or closing movement of a movable furniture component, wherein the fastening interface (23) preferably has a guide strip (39), on which the damping unit (40) is movably guided.

9. Device according to any one of the preceding claims, **characterised in that** the accessory carrier (21) consists of plastic, in particular is formed as a plastic injection-moulded part.

10. Furniture part **characterised by** a device (11) according to any one of claims 1 to 9.

11. Piece of furniture, with a furniture body and a movable furniture part movably guided via a guide device (13), in particular a drawer, a door or a flap, **characterised by** a device (11) according to any one of claims 1 to 12, wherein the guide device (13) preferably has at least one guide unit, which has a body rail (15) which can be fastened on the furniture body via at least one mounting bracket (16a, 16b) and at least one running rail connected to the fastenable furniture part and mounted so as to be movable relative to the body rail (15), wherein the mounting bracket (16a, 16b) has a mounting section (20), on which the accessory carrier (21) is mounted.

## Revendications

1. Dispositif de fixation de pièces accessoires à un composant de meuble d'un meuble, avec un support d'accessoire (21) qui présente au moins une interface de montage (22) pour la fixation sans outil au composant de meuble et au moins une interface de fixation (23) pour la fixation de pièces accessoires au support d'accessoire (21), dans lequel l'interface de montage (22) présente au niveau du support d'accessoire (21) des premier et second moyens de retenue (27a, 27b), par lesquels le support d'accessoire (21) peut être maintenu de manière détachable au niveau de la section de montage (20) associée du composant de meuble, dans lequel les premier et second moyens de retenue (27a, 27b) peuvent recouvrir la section de montage (20) associée au niveau du composant de meuble, et dans lequel les premier et second moyens de retenue (27a, 27b) sont opposés et délimitent entre eux un espace de réception (28) s'étendant dans un sens longitudinal du support d'accessoire (21) pour la section de montage (20) associée au niveau du composant de meuble, dans lequel le support d'accessoire (21) présente une fente (34) ouverte vers un côté de bord du support d'accessoire (21), s'étendant transversalement à l'étendue longitudinale de l'espace de réception (28) qui sépare le support d'accessoire (21) en une première et une seconde partie de support (33a, 33b), dans lequel les parties de support (33a, 33b) sont mobiles l'une par rapport à l'autre de telle manière que la distance entre les deux moyens de retenue pour le montage du support d'accessoire au niveau de la section de montage (20) associée puisse être agrandie en élargissant la fente (34), **caractérisé en ce que** des moyens de ressort (32) sont agencés dans la fente, dont la force de ressort agit contre l'élargissement de la fente (34).

2. Dispositif selon la revendication 1, **caractérisé en ce que** le support d'accessoire (21) est réalisé en tant que corps plat, en particulier comme une plaque.

3. Dispositif selon la revendication 1 ou 2, **caractérisé en ce que** les premiers moyens de retenue (27a) présentent un évidement de retenue (29) s'étendant dans le sens longitudinal du support d'accessoire (21) pour la réception d'une extrémité libre de la section de montage (20).

4. Dispositif selon l'une des revendications précédentes, **caractérisé en ce que** les seconds moyens de retenue (27b) présentent une saillie de retenue tournée en direction des premiers moyens de retenue (27a) qui recouvre une extrémité libre de la section de montage.

5. Dispositif selon l'une des revendications précédentes, **caractérisé en ce que** les moyens de ressort sont reliés d'un seul tenant aux parties de support (33a, 33b), en particulier présentent au moins un ressort à lames conçu en particulier en forme de boucle.

6. Dispositif selon l'une des revendications précédentes, **caractérisé en ce que** l'interface de fixation (23) présente au moins une ouverture de fixation réalisée en particulier en tant que percée (36) pour une partie d'accessoire associée.

7. Dispositif selon l'une des revendications précédentes, **caractérisé en ce que** le support d'accessoire (21) présente un élément conducteur (37) réalisé en particulier comme entretoise, au niveau du côté inférieur duquel une surface conductrice (38) s'étendant en biais est réalisée, au niveau de laquelle un élément fonctionnel co-agissant avec le support d'accessoire (21), associé à un composant de meuble mobile peut être guidé.

8. Dispositif selon l'une des revendications précédentes, **caractérisé en ce qu'**une unité d'amortisseur (40) est fixée à l'interface de fixation (23) en particulier pour l'amortissement du mouvement d'ouverture et/ou de fermeture d'un composant de meuble mobile, dans lequel de préférence l'interface de fixation (23) présente une baguette de guidage (39), au niveau de laquelle l'unité d'amortisseur (40) est guidée de manière mobile.

9. Dispositif selon l'une des revendications précédentes, **caractérisé en ce que** le support d'accessoire (21) se compose de matière plastique, en particulier est réalisé en tant que partie moulée par injection en matière plastique.

10. Partie de meuble **caractérisée par** un dispositif (11) selon l'une des revendications 1 à 9.

11. Meuble avec un corps de meuble et une partie de meuble mobile guidée de manière mobile par le biais d'un dispositif de guidage (13), en particulier tiroir, porte ou clapet, **caractérisé par** un dispositif (11) selon l'une des revendications 1 à 12, dans lequel de préférence le dispositif de guidage (13) présente au moins une unité de guidage qui présente un rail de corps (15) pouvant être fixé au corps de meuble par le biais d'au moins un angle de montage (16a, 16b) et au moins un rail de roulement relié à la partie de meuble mobile, logé de manière relativement mobile par rapport au rail de corps (15), dans lequel l'angle de montage (16a, 16b) présente une section de montage (20), au niveau de laquelle le support d'accessoire (21) est monté.
